# EUROPÄISCHE PATENTANMELDUNG

(11) **EP 3 604 320 A1**
(43) Veröffentlichungstag der Anmeldung: **05.02.2020**
(21) Anmeldenummer: 18186771.4
(22) Anmeldetag: 01.08.2018
(51) Int. Cl.: C07F 9/655, C08G 18/50, C07F 9/40, C08G 65/26, C09K 21/14, C08G 18/48, C08K 5/5333

(54) **PHOSPHORFUNKTIONELLE POLYOXYALKYLENPOLYOLE UND VERFAHREN ZU DEREN HERSTELLUNG**

(71) Anmelder: Covestro Deutschland AG, 51373 Leverkusen (DE)
(72) Erfinder: GÜRTLER, Christoph, 50735 Köln (DE); MÜLLER, Thomas Ernst, 52074 Aachen (DE); COZZULA, Daniela, 52066 Aachen (DE); GIANNERINI, Massimo, 6291 EL Vaals (NL); SUBHANI, Afzal, 52066 Aachen (DE); KÖHLER, Burkhard, 34289 Zierenberg (DE); LEITNER, Walter, 52074 Aachen (DE)
(74) Vertreter: Levpat

(57) **Zusammenfassung**

Die Erfindung betrifft ein Verfahren zur Herstellung eines phosphorfunktionellen Polyoxyalkylenpolyols, bei dem ein Polyoxyalkylenpolyol unter Verwendung eines phosphorfunktionellen Epoxides, der Formel I 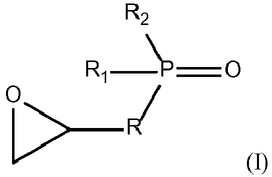 als Comonomer hergestellt wurde, wobei
R für eine von eine mindestens zweigliedrige Kette steht und R1 und R2 für einen C1-C22-Alkyl, einen C1-C22-Alkoxy, einen C7-C15 Arylalkyl- oder Alkylaryl oder Arylalkoxy oder Alkylaryloxyrest oder einen C6-C14 Aryl oder Aryloxyrest steht oder R1 und R2 Glieder eines neben dem Phosphoratom Kohlenstoffatome und bis zu zwei Sauerstoffatome enthaltenden 5, 6 oder 7 gliedrigen Rings sein können, der durch annelierte Benzoringe substituiert sein kann. Ein weiterer Gegenstand sind auch phosphorfunktionelle Polyoxyalkylenpolyol erhältlich nach dem erfindungsgemäßen Verfahren.

## Beschreibung

Die Erfindung betrifft ein Verfahren zur Herstellung eines phosphorfunktionellen Polyoxyalkylenpolyols, bei dem ein Polyoxyalkylenpolyol unter Verwendung eines phosphorfunktionellen Epoxides, der Formel I 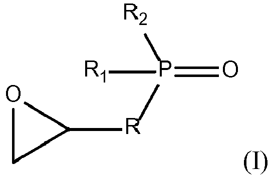 als Comonomer hergestellt wurde, wobei

R für eine von eine mindestens zweigliedrige Kette steht und R1 und R2 für einen C1-C22-Alkyl, einen C1-C22-Alkoxy, einen C7-C15 Arylalkyl- oder Alkylaryl oder Arylalkoxy oder Alkylaryloxyrest oder einen C6-C14 Aryl oder Aryloxyrest steht oder R1 und R2 Glieder eines neben dem Phosphoratom Kohlenstoffatome und bis zu zwei Sauerstoffatome enthaltenden 5, 6 oder 7 gliedrigen Rings sein können, der durch annelierte Benzoringe substituiert sein kann.

Des Weiteren betrifft die Erfindung ein phosphorfunktionelles Polyoxyalkylenpolyol herstellbar nach dem erfindungsgemäßen Verfahren sowie deren Verwendung unter anderem in der Erzeugung eines phosphorfunktionellen Polyurethan-Polymers.

Moderne Kunststoffe sollen neben einer maßgeschneiderten Funktionalität auch verstärkt ökologischen Gesichtspunkten Rechnung tragen. Dies kann, neben einer allgemeinen Optimierung von Herstellprozessen, auch durch den Einsatz von Treibhausgasen, wie Kohlendioxid, als Synthesebausteine zum Aufbau von Polymeren erreicht werden. So lässt sich zum Beispiel über die Fixierung von Kohlendioxid insgesamt eine bessere Prozess-Umweltbilanz erhalten. Dieser Weg wird im Bereich der Herstellung von Polyethercarbonaten beschritten und bildet seit mehr als 40 Jahren Stand intensiver Forschung (z. B. Inoue et al, Copolymerization of Carbon Dioxide and Alkylenoxide with Organometallic Compounds; Die Makromolekulare Chemie 130, 210-220, 1969). In einer möglichen Herstellungsvariante werden dabei Polyethercarbonate durch eine katalytische Umsetzung von Epoxiden und Kohlendioxid in Anwesenheit H-funktioneller Startersubstanzen ("Starter") erhalten. Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei a, b und c für eine ganzzahlige Zahl stehen, und wobei das hier im Schema (I) gezeigte Produkt für das Polyoxyalkylenpolyol lediglich so verstanden werden soll, dass sich Blöcke mit der gezeigten Struktur im erhaltenen Polyoxyalkylenpolyol prinzipiell wiederfinden können, die Reihenfolge, Anzahl und Länge der Blöcke sowie die OH-Funktionalität des Starters aber variieren kann und nicht auf das in Schema (I) gezeigte Polyoxyalkylenpolyol beschränkt ist.

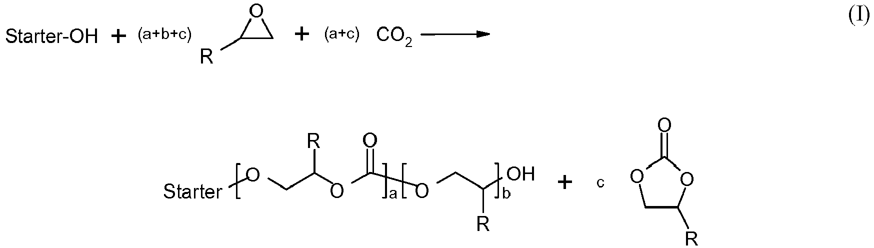

Als weiteres Produkt, hier ein unerwünschtes Nebenprodukt, entsteht neben dem Polyethercarbonat ein cyclisches Carbonat (beispielsweise für R = CH₃ Propylencarbonat).

Prinzipiell ist es dabei möglich, diese Art von Polyoxyalkylenpolyolen spezifisch für bestimmte Anwendungsgebiete zu funktionalisieren. Ist zum Beispiel gewünscht, dass das Polymer bestimmte flammhemmende Eigenschaften aufweist, so lässt sich dies über unterschiedliche Wege erreichen. Zum einen kann der Flammschutz dieser Polymere durch Zusatz niedermolekularer oder oligomerer Phosphorverbindungen erfolgen. Auch heterogene Feststoffe, wie (verkapselter) roter Phosphor oder Melaminpolyphosphat können an dieser Stelle zugesetzt werden. Nachteilig hingegen ist, dass diese Flammschutzadditive die mechanischen und anderen physikalischen Eigenschaften von Polymeren verschlechtern können. Diese negativen Effekte sind beispielsweise in US 20130046036 A1 genannt.

Die US 2008/0227884 beschreibt die Herstellung phosphorfunktioneller Epoxide, z.B. durch radikalische Addition von 9,10-Dihydro-9-oxa-10-phosphaphenanthren-10-oxid (DOPO) an Allylglycidylether und die Verwendung des Umsetzungsproduktes als reaktives Flammschutzadditiv in Epoxidharzen. Solche Harze sind vernetzt und nicht als Rohstoffe für die Produktion von Polyolen, die als Ausgangsprodukte für Polyurethane dienen sollen, geeignet.

Die WO 2014198573 beschreibt die Verwendung von Diethoxyphosphorylmethyloxiran, erhältlich durch Michaelis-Arbusov-Reaktion von Triethylphosphit mit Epibromhydrin, als Comonomer für die Herstellung von Polyethern. Als Katalysator wurden heterocyclische Amine eingesetzt, die nur einen blockweise erfolgenden Einbau auf handelsüblichen Polyetherpolyolen als Starter, erlauben. Die hier verwendeten phosphorhaltigen Monomere verursachen eine Deaktivierung von DMC-Katalysatoren, was die Herstellung von phosphorhaltigen Polyethercarbonaten verhindert.

Die Aufgabe der vorliegenden Erfindung besteht darin, ein verbessertes Verfahren zur Herstellung flammgeschützter Polyoxyalkylenpolyole zur Verfügung zu stellen, das keine Nachteile hinsichtlich der Herstellung der Polymere an sich mit sich bringt.

Diese Aufgabe wird erfindungsgemäß gelöst durch ein Verfahren zur Herstellung eines phosphorfunktionellen Polyoxyalkylenpolyols, bei dem ein Polyoxyalkylenpolyol unter Verwendung eines phosphorfunktionellen Epoxides, der Formel I 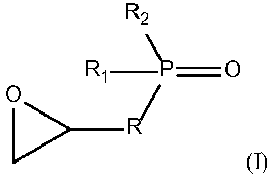 als Comonomer hergestellt wurde, wobei

R für eine von eine mindestens zweigliedrige Kette steht und R1 und R2 für einen C1-C22-Alkyl, einen C1-C22-Alkoxy, einen C7-C15 Arylalkyl- oder Alkylaryl oder Arylalkoxy oder Alkylaryloxyrest oder einen C6-C14 Aryl oder Aryloxyrest steht oder R1 und R2 Glieder eines neben dem Phosphoratom Kohlenstoffatome und bis zu zwei Sauerstoffatome enthaltenden 5, 6 oder 7 gliedrigen Rings sein können, der durch annelierte Benzoringe substituiert sein kann.

Der Erfindung liegt die Erkenntnis zugrunde, dass durch die Verwendung von phosphorhaltigen Epoxiden der Formel (I) als Monomer, die als Rest R einen längeren Spacer als eine Methylengruppe aufweisen, die vorgenannten Nachteile aus dem Stand der Technik überwunden werden können, da durch den festen Einbau in das Polymer keine weichmachende Wirkung durch kurzkettige Flammschutzadditive auftritt und keine Deaktivierung des Polymerisationskatalysators auftritt.

In einer bevorzugten Ausführungsform des erfindungsgemäßen Verfahrens steht R für einen unsubstituierten C1-C22-Alkylrest, substituierten C1-C22-Alkylrest, unsubstituierten C6-C14 Arylrest oder einen substituierten C6-C14 Arylrest und R1 und R2 unabhängig voneinander für einen C1-C8-Alkoxyrest

In einer besonders bevorzugten Ausführungsform des erfindungsgemäßen Verfahrens ist das phosphorfunktionelle Epoxid eine oder mehrere Verbindung(en) ist und ausgewählt wird aus der Gruppe bestehend aus Diethyl (9- (oxiran-2-yl) nonyl) phosphonat, Tetraethyl(4,4 - methylenebis(4,1-phenylene)-bis(azanediyl)) bis((3-methoxy-4-(oxiran-2-ylmethoxy)phenyl)methylene)diphosphonat, 2-(6-oxabicyclo [3.1.0]hex-3-yl)ethyl phosphonic acid diisopropyl ester, 2,3-Epoxy-cyclohexyl-phosphinsaeure-diaethylester, 2,3-Epoxy-cyclohexyl)-phosphinsaeure-dipropylester, 2,3-Epoxy-cyclohexyl)-phosphinsaeure-dipropylester, Ethyl 2-(diethoxyphosphoryl)-5-(oxiran-2-yl)pentanoate und Diethyl (4- (oxiran-2-ylmethoxy) phenyl) phosphonat bevorzugt Diethyl (4- (oxiran-2-ylmethoxy) phenyl) phosphonat.

Überraschenderweise wurde gefunden, dass dieses Herstellungsverfahren eine effiziente und gesteuerte Phosphor-Funktionalisierung von Polyoxyalkylenpolyolen ermöglicht. Die Phosphorgruppen sind dabei kovalent an das Polymergerüst gebunden. Somit ergeben sich funktionalisierte Polyoxyalkylenpolyole mit einer definierten Phosphorfunktionalität. Dies steht im Gegensatz zu Polymeren mit über ionische oder van-der-Waals-Wechselwirkungen schwach gebundenen Phosphorgruppen, deren Gehalt an Phosphorverbindung und deren Eigenschaften sich im Zuge einer Lagerung oder in anschließenden Umsetzungs- oder Aufreinigungsschritten ändern kann. Dies ist durch die kovalente Anbindung der phosphorhaltigen Gruppe an das Polymergerüst gemäß dem erfindungsgemäßen Verfahren ausgeschlossen. Des Weiteren ermöglicht diese Verfahrensführung einen schnellen und gesteuerten Aufbau der eigentlichen Polyoxyalkylenpolyole, ohne eine Inaktivierung des zum Aufbau der Polyoxyalkylenpolyole benötigten Katalysators durch Chelatbildung befürchten zu müssen.

In einer Ausführungsform des erfindungsgemäßen Verfahrens sind die Polyoxyalkylenpolyole sind Polycarbonatpolyole, Polyester¬carbonatpolyole, Polyoxyalkylencarbonatpolyole oder Polyethercarbonatpolyole, bevorzugt Polyethercarbonatpolyole.

Diese Phosphor-Funktionalität kann durch Wahl verschiedener Mengen an Phosphorfunktionellem Epoxid als Comonomer in Abhängigkeit der Erfordernisse in der späteren Anwendung gewählt werden. Die erhaltenen phosphorhaltigen Polyoxyalkylenpolyole sind zudem ökologisch vorteilhaft, da sie keine niedermolekularen Phosphorverbindungen enthalten. Ohne an eine Theorie gebunden zu sein können die nach diesem Verfahren erhältlichen phosphorfunktionellen Polyethercarboanatpolyole im Brandfall eine verstärkte Carbonifizierung einleiten, wodurch eine schützende Oberflächenschicht gebildet wird, welche letztendlich die Menge des brennbaren Materials verringert. Des Weiteren kann es durch zusätzliche Freisetzung von Gasen zur Bildung einer voluminösen Isolationsschicht kommen, welche flammhemmend wirkt. Als weitere Möglichkeit können die phosphorfunktionellen Polyoxyalkylenpolyole oder daraus gebildete Zersetzungsprodukte in der Gasphase radikalische Spezies abfangen und somit den Verbrennungsprozess hemmen.

Ausführungsformen und weitere Aspekte der vorliegenden Erfindung werden nachfolgend beschrieben. Sie können beliebig miteinander kombiniert werden, sofern sich aus dem Zusammenhang nicht eindeutig das Gegenteil ergibt.

Die erhältlichen phosphorfunktionellen Polyoxyalkylenpolyole zeigen eine ausgesprochen gute flammhemmende Wirkung unter einer nur relativ geringen Änderung der sonstigen Gebrauchseigenschaften des Polymers. Dies kann insbesondere für die Viskosität des phosphorfunktionellen Polyoxyalkylenpolyols gelten, welche im Rahmen weiterer Umsetzungsschritte möglichst niedrig gehalten werden sollte.

In einer weiteren Ausgestaltung des Verfahren kann das Phosphor-funktionelle Polyoxyalkylenpolyol einen Anteil an Phosphorfunktionellen Epoxiden als Comonomeren innerhalb des Polyoxyalkylenpolyols in Höhe von größer oder gleich 0,1 mol-% und kleiner oder gleich 50 mol-% aufweisen. Bevorzugt beträgt der Anteil an Phosphorfunktionellen Epoxiden innerhalb des Polyoxyalkylenpolyols größer oder gleich 1 mol-% und kleiner oder gleich 40 mol-%, besonders bevorzugt größer oder gleich 5 mol-% und kleiner oder gleich 25 mol-%. Diese Anzahl an Phosphorfunktionellen Wiederholungseinheiten der phosphorfunktionellen Polyoxyalkylenpolyole hat sich als besonders vorteilhaft erwiesen. Zum einen lassen sich phosphorfunktionelle Polyoxyalkylenpolyole erhalten, welche einen ausreichen Flammschutz bereitstellen können und zum anderen werden zu starke Änderungen der Polymereigenschaften des Polyoxyalkylen-Polymers vermieden. Dies kann insbesondere für die Viskosität des modifizierten Basispolymers gelten, welche bei einem noch höheren Anteil an Phosphorfunktionellen Epoxiden als Comonomeren zu stark ansteigen könnte. Kleinere Gehalte an Phosphorfunktionellen Epoxiden als Comonomere im Polyoxyalkylen-Polymer können zu einer nur ungenügenden phosphorfunktionellen Funktionalisierung des Polymers und damit zu einem ungenügenden Flammschutz führen.

Der Phosphorgehalt der gemäß dem erfindungsgemäßen Verfahren erhaltenen phosphorfunktionellen Polyoxyalkylenpolyole kann zwischen 0,5 und 15 Gew.-%, bevorzugt zwischen 1 und 10 Gew.-% und besonders bevorzugt zwischen 1 und 4 Gew.-% liegen. Dieser Phosphoranteil kann zu einer hinreichenden flammhemmenden Wirkung der phosphorfunktionellen Polyoxyalkylenpolyole und der daraus hergestellten Produkte beitragen.

In einer bevorzugten Ausführungsform der Erfindung umfasst das Verfahren zur Herstellung des Phosphorfunktionellen Polyoxyalkylenpolyols die Schritte
(α) Vorlegen einer H-funktionellen Starterverbindung und eines DMC-Katalysators,
(β) gegebenenfalls Zudosieren eines phosphorfreien Epoxids,
(γ) Zudosieren
   (γ1) mindestens eines Epoxids, sowie
   (γ2) mindestens des phosphorfunktionellen Epoxides und
   (γ3) optional von Kohlendioxid, bevorzugt von Kohlendioxid.

Ferner können als Monomere zur Synthese des Phosphorfunktionellen Polyoxyalkylenpolyols Alkylenoxide (Epoxide) mit 2-45 Kohlenstoffatomen eingesetzt werden, die keine Phosphorfunktionelle Gruppe tragen. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise können als Alkylenoxide Ethylenoxid und/oder Propylenoxid, insbesondere Propylenoxid eingesetzt werden.

Auch doppelbindungshaltige Epoxide, wie Allylglycidylether, Vinylcyclohexenmonooxid, Butadienmonooxid, Limonenmonooxid können als Comonomer eingesetzt werden

Zusätzlich können als Monomere cyclische Anhydride, Lactide oder Lactone eingesetzt werden, die doppelbindungsfrei oder doppelbindungshaltig sein können.

Polyoxyalkylenpolyole mit Phosphorfunktionellen Gruppen sind beispielhaft in Formel (II) wiedergegeben, wobei das hier im Formel (II) gezeigte Produkt für das Polyoxyalkylenpolyol lediglich so verstanden werden soll, dass sich Blöcke mit der gezeigten Struktur im erhaltenen Polyoxyalkylenpolyol prinzipiell wiederfinden können, die Reihenfolge, Anzahl und Länge der Blöcke sowie die OH-Funktionalität des Starters aber variieren kann und nicht auf das in Formel (II) gezeigte Polyoxyalkylenpolyol beschränkt ist, und 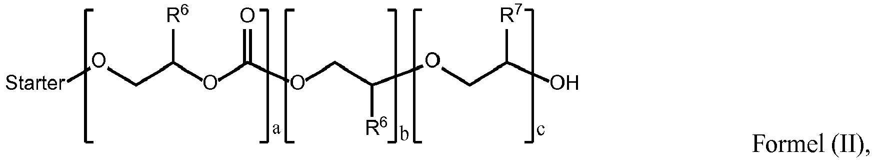 wobei R⁶ C1-C43 Alkyl, C7-C70 Alkylaryl oder C6-C70 Aryl bedeutet, wobei jeweils auch Heteroatome wie O, S, Si enthalten sein können, und
wobei R⁷ einen Phosphorfunktionellen Rest bedeuten, der auch weitere Heteroatome wie O, S, Si enthalten sein kann, und bei dem die Länge des Spacers zwischen dem Oxiranring und dem Phosphoratom mindestens zwei Kettenglieder beträgt und
wobei a und b für eine ganze Zahl stehen und das Verhältnis von a/b 2 : 1 bis 1 : 20, insbesondere 1,5 : 1 bis 1 : 10, beträgt und
wobei c für null oder eine ganze Zahl stehen und der Anteil an Phosphorfunktionellen Epoxiden als Comonomeren innerhalb des Polyoxyalkylenpolyols (c) bezogen auf die enthaltenen chemischen Gruppen ohne Starter (Summe a + b + c) einen Wert von größer oder gleich 0,1 : 100 und kleiner oder gleich 50 : 100 aufweist. Bevorzugt beträgt der Anteil an Phosphorfunktionellen Wiederholungseinheiten innerhalb des Polyoxyalkylenpolyols größer oder gleich 1 : 100 und kleiner oder gleich 40 : 100, besonders bevorzugt größer oder gleich 5 : 100 und kleiner oder gleich 25 : 100.

Eine bevorzugte Ausführungsform für das erfindungsgemäß einsetzbare Verfahren zur Herstellung von Polyoxyalkylenpolyolen mit Phosphorfunktionellen Wiederholungseinheiten beinhaltet die Umsetzung einer oder mehrerer H-funktioneller Starterverbindungen, einem oder mehrerer Alkylenoxide, einem oder mehrerer Comonomere und Kohlendioxid in Gegenwart eines DMC-Katalysators, wobei
(α) eine H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("erste Aktivierungsstufe"), wobei der DMC-Katalysator der H-funktionellen Startersubstanz oder dem Gemisch von mindestens zwei H-funktionellen Startersubstanzen vor oder nach der 1. Aktivierungsstufe zugesetzt wird,
(β) eine Teilmenge (bezogen auf die Gesamtmenge der in den Schritten (β) und (γ) eingesetzten Menge an phosphorfreien Epoxiden/cyclischen Anhydriden) von einem oder mehreren Epoxiden zu der aus Schritt (α) resultierenden Mischung zugesetzt wird ("zweite Aktivierungsstufe"), wobei gegebenenfalls die Zugabe einer Teilmenge an Epoxid in Gegenwart von CO₂ und/oder Inertgas (wie beispielsweise Stickstoff oder Argon) erfolgen kann, und wobei eine Mehrfachdosierung ebenfalls möglich ist (d.h. der Schitt (β) kann mehrfach, vorzugsweise ein bis dreimal wiederholt werden, und
(γ) ein oder mehrere phosphorhaltige und phosphorfreie Epoxide/ cyclische Anhydride, ein oder mehrere Comonomere und Kohlendioxid zu der aus Schritt (β) resultierenden Mischung fortwährend zudosiert werden, wobei die für die Terpolymerisation eingesetzten Epoxide/cyclischen Anhydride gleich oder von den bei Schritt (β) eingesetzten Epoxiden verschieden sind ("Polymerisationsstufe").

### Zu Schritt (α):

Die Zugabe der einzelnen Komponenten in Schritt (α) kann gleichzeitig oder nacheinander in beliebiger Reihenfolge erfolgen, bevorzugt wird in Schritt (α) zunächst der DMC-Katalysator vorgelegt und gleichzeitig oder anschließend die H-funktionelle Starterverbindung zugesetzt.

Gegenstand einer bevorzugten Ausführungsform ist ein Verfahren, wobei in Schritt (α)
(α1) in einem Reaktor der DMC-Katalysator und eine oder mehrere H-funktionelle Starterverbindungen vorgelegt werden,
(α2) [erste Aktivierungsstufe] durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (α)
(α1) die H-funktionelle Starterverbindung oder ein Gemisch aus mindestens zwei H-funktionellen Starterverbindungen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre, vorgelegt wird und
(α2) [erste Aktivierungsstufe] in das resultierende Gemisch aus DMC-Katalysator und einer oder mehrerer H-funktioneller Starterverbindungen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt ein Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird, wobei der Doppelmetallcyanid-Katalysator zu der H-funktionellen Startersubstanz oder dem Gemisch aus mindestens zwei H-funktionellen Startersubstanzen in Schritt (α1) oder unmittelbar anschließend in Schritt (α2) zugesetzt werden kann.

Der DMC-Katalysator kann in fester Form oder in einer H-funktionellen Starterverbindung suspendiert zugegeben werden. Wird der DMC-Katalysator als Suspension zugegeben, wird diese bevorzugt in Schritt (α1) der einen oder mehreren H-funktionellen Starterverbindungen zugefügt.

### Zu Schritt (β):

Der Schritt (β) der zweiten Aktivierungsstufe kann in Gegenwart von CO₂ und/oder einem Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des oder der Epoxide/cyclischen Anhydride kann bei einem beliebig zuvor gewählten Vordruck erfolgen. Als Gesamtdruck (absolut) der Atmosphäre wird in Schritt (β) vorzugsweise ein Bereich von 10 mbar bis 100 bar, vorzugsweise 100 mbar bis 50 bar und weiterhin bevorzugt 500 mbar bis 50 bar eingestellt. Gegebenenfalls kann während oder nach der Dosierung der Epoxide/cyclischen Anhydride der Druck durch Einleiten von weiteren Kohlendioxids nachgeregelt werden, wobei der Druck (absolut) 10 mbar bis 100 bar, vorzugsweise 100 mbar bis 50 bar und bevorzugt 500 mbar bis 50 bar beträgt.

In einer bevorzugten Ausführungsform kann die bei der Aktivierung in Schritt (β) eingesetzte Menge an einem oder mehreren Epoxiden/cyclischen Anhydriden 0,1 bis 25,0 Gew.%, bevorzugt 1,0 bis 20,0 Gew.%, besonders bevorzugt 2,0 bis 16,0 Gew.%, bezogen auf die im Schritt (α) eingesetzte Menge an H-funktioneller Starterverbindung betragen. Die Epoxide/cyclische Anhydride können in einem Schritt oder schrittweise in mehreren Teilmengen zugegeben werden.

In einer bevorzugten Ausführungsform zur Herstellung des Polyoxyalkylenpolyole mit phosphorfunktionellen Wiederholungseinheiten kann bei der Aktivierung in Schritt (β) eine Teilmenge (bezogen auf die Gesamtmenge der in den Schritten (β) und (γ) eingesetzten Menge an Epoxiden/cyclischen Anhydriden) von einem oder mehreren phosphorfreien Epoxiden/cyclischen Anhydriden zu der aus Schritt (α) resultierenden Mischung zugesetzt [zweite Aktivierungsstufe] werden. Die Zugabe einer Teilmenge an Epoxid/cyclischen Anhydrid kann gegebenenfalls in Gegenwart von CO₂ und/oder Inertgas erfolgen. Der Schritt (β) kann auch mehrfach erfolgen. Der DMC-Katalysator wird vorzugsweise in einer Menge eingesetzt, so dass der Gehalt an DMC-Katalysator im resultierenden Polyoxyalkylenpolyol 10 bis 10000 ppm, besonders bevorzugt 20 bis 5000 ppm und höchst bevorzugt 50 bis 500 ppm beträgt.

Beim zweiten Aktivierungsschritt kann das Epoxid/cyclische Anhydrid beispielsweise in einer Portion oder innerhalb von 1 bis 15 Minuten, vorzugsweise 5 bis 10 Minuten zugegeben werden. Die Dauer des zweiten Aktivierungsschritts beträgt bevorzugt 15 bis 240 Minuten, besonders bevorzugt 20 bis 60 Minuten.

### Zu Schritt (γ):

Die Dosierung von phosphorhalatigen und phosphorfreien Epoxiden und von cyclischem Anhydrid kann simultan, wechselweise oder sequentiell erfolgen. Es ist möglich, Epoxid mit einer konstanten Dosierrate zu dosieren oder die Dosierrate kontinuierlich oder schrittweise zu steigern oder zu senken oder das Epoxid portionsweise zuzugeben. Bevorzugt wird das Epoxid/cyclische Anhydrid mit konstanter Dosierrate dem Reaktionsgemisch zugegeben. Werden mehrere Epoxide/cyclischen Anhydride innerhalb einer Stufe zur Synthese der Polyoxyalkylenpolyole eingesetzt, so können die Epoxide/cyclische Anhydride einzeln oder als Gemisch zudosiert werden. Die Dosierung der Epoxide/cyclischen Anhydride kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Epoxide und/oder cyclischen Anhydride ist es möglich, statistische, alternierende, blockartige oder gradientenartige Polyoxyalkylenpolyole zu synthetisieren. Besonders bevorzugt wird die phoshorhaltigen Epoxide im Gemisch mit phosphorfreien Epoxiden zu dosiert.

Schritt (γ) kann beispielsweise bei Temperaturen von 60 bis 150°C, vorzugsweise von 80 bis 120°C, ganz besonders bevorzugt von 90 bis 110°C durchgeführt werden. Werden Temperaturen unterhalb von 60°C eingestellt, kommt die Reaktion zum Erliegen. Bei Temperaturen oberhalb von 150°C steigt die Menge an unerwünschten Nebenprodukten stark an.

In einer bevorzugten Ausführungsform der Erfindung erfolgt der Schritt (γ) unter Zugabe von Epoxid, cyclischem Anhydrid und von Kohlendioxid; hierbei wird als Polyoxyalkylenpolyol ein Polyoxyalkylenpolyol erhalten. Die Dosierung von Epoxid, von cyclischem Anhydrid und Kohlendioxid kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Epoxide/cyclischen Anhydride den CO₂-Druck allmählich oder schrittweise zu steigern oder zu senken oder konstant zu lassen. Vorzugsweise wird der Gesamtdruck während der Reaktion durch eine Nachdosierung an Kohlendioxid konstant gehalten. Die Dosierung des oder der Epoxide/cyclischen Anhydride und des CO₂ kann simultan, wechselweise oder sequentiell zur Kohlendioxid Dosierung erfolgen. Es ist möglich, das Epoxid mit einer konstanten Dosierrate zu dosieren oder die Dosierrate kontinuierlich oder schrittweise zu steigern oder zu senken oder das Epoxid portionsweise zuzugeben. Bevorzugt wird das Epoxid/cyclische Anhydrid mit konstanter Dosierrate dem Reaktionsgemisch zugegeben. Werden mehrere Epoxide/cyclischen Anhydride innerhalb einer Stufe zur Synthese der Polyoxyalkylenpolyole eingesetzt, so können die Epoxide/cyclische Anhydride einzeln oder als Gemisch zudosiert werden. Die Dosierung der Epoxide/cyclischen Anhydride kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Epoxide/cyclischen Anhydride und/oder des Kohlendioxids ist es möglich, statistische, alternierende, blockartige oder gradientenartige Polyoxyalkylenpolyole zu synthetisieren.

Vorzugsweise wird ein Überschuss an Kohlendioxid bezogen auf die berechnete Menge an benötigtem Kohlendioxid im Polyoxyalkylenpolyol eingesetzt, da bedingt durch die Reaktionsträgheit des Kohlendioxids ein Kohlendioxid-Überschuss von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyoxyalkylenpolyole als vorteilhaft erwiesen. Es ist möglich, das Kohlendioxid dem Reaktionsbehälter kontinuierlich oder diskontinuierlich zuzuführen. Dies hängt davon ab, wie schnell die Epoxide und das CO₂ verbraucht werden und ob das Produkt gegebenenfalls CO₂-freie Polyether-Blöcke oder Blöcke mit unterschiedlichem CO₂-Gehalt enthalten soll. Die Konzentration des Kohlendioxids kann bei der Zugabe der Epoxide/cyclischen Anhydride ebenso variieren. Je nach gewählten Reaktionsbedingungen ist es möglich, das CO₂ im gasförmigen, flüssigen oder überkritischen Zustand in den Reaktor einzuleiten. CO₂ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch
(i) Begasung des Reaktionsgemisches im Reaktor von unten,
(ii) Verwendung eines Hohlwellenrührers,
(iii) eine Kombination aus den Dosierungen gemäß (i) und (ii), und/oder
(iv) Begasung über die Flüssigkeitsoberfläche durch Einsatz mehrstufiger ausgeführter Rührorgane.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend CO₂ und ggf. unverbrauchtes Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Epoxiden/cyclischen Anhydriden, wieder in das Reaktionsgemisches gemäß (i), (ii), (iii) und/oder (iv) eingeleitet.

Bevorzugt wird der Druckabfall, welcher über Einbau des Kohlendioxids und der Epoxide bei der Terpolymerisation in das Reaktionsprodukt entsteht, über frisch zudosiertes Kohlendioxid ausgeglichen.

Die Einleitung der Epoxide/cyclischen Anhydride kann separat oder zusammen mit dem CO₂ sowohl über die Flüssigkeitsoberfläche oder direkt in die flüssige Phase erfolgen. Bevorzugt erfolgt die Einleitung der Epoxide/cyclischen Anhydride direkt in die flüssige Phase, da dies den Vorteil hat, dass eine rasche Durchmischung der eingebrachten Verbindungen mit der flüssigen Phase erfolgt und so lokale Konzentrationsspitzen vermieden werden können. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Polyoxyalkylenpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, sollte besonders auf die Dosiergeschwindigkeit der Epoxide geachtet werden. Sie sollte so eingestellt werden, dass trotz der inhibierenden Wirkung des Kohlendioxids die Epoxide/cyclischen Anhydride genügend schnell abreagieren können. Die Konzentration an freien Epoxiden/cyclischen Anhydriden in der Reaktionsmischung während der zweiten Aktivierungsstufe (Schritt β) beträgt vorzugsweise > 0 bis 100 Gew.%, besonders bevorzugt > 0 bis 50 Gew.%, höchst bevorzugt > 0 bis 20 Gew.% (jeweils bezogen auf das Gewicht der Reaktionsmischung). Die Konzentration an freien Epoxiden/cyclischen Anhydriden in der Reaktionsmischung während der Reaktion (Schritt γ) beträgt vorzugsweise > 0 bis 40 Gew.%, besonders bevorzugt > 0 bis 25 Gew.%, höchst bevorzugt > 0 bis 15 Gew.% (jeweils bezogen auf das Gewicht der Reaktionsmischung).

Eine weitere Ausführungsform im Rührkessel für die Copolymerisation (Schritt γ) ist dadurch gekennzeichnet, dass auch eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Starterverbindungen).

In einer bevorzugten Ausführungsform wird die gemäß der Schritte (α) und (β) aktivierte Katalysator-Starter-Mischung in demselben Reaktor weiter mit Epoxiden/cyclischen Anhydriden und Kohlendioxid umgesetzt.

In einer weiteren bevorzugten Ausführungsform wird die gemäß der Schritte (α) und (β) aktivierte Katalysator-Starter-Mischung in einem anderen Reaktionsbehältnis (beispielsweise einem Rührkessel, Rohrreaktor oder Schlaufenreaktor) weiter mit Epoxiden/cyclischen Anhydriden und Kohlendioxid umgesetzt. In einer weiteren bevorzugten Ausführungsform wird die gemäß Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit Epoxiden/cyclischen Anhydriden und Kohlendioxid umgesetzt.

Bei Reaktionsführung in einem Rohrreaktor werden die gemäß Schritt (α) vorbereitete Katalysator-Starter-Mischung oder die gemäß der Schritte (α) und (β) aktivierte Katalysator-Starter-Mischung und gegebenenfalls weitere Starter sowie Epoxiden/cyclischen Anhydriden und Kohlendioxid kontinuierlich durch ein Rohr gepumpt. Bei Verwendung einer gemäß dem Schritt (α) vorbereiteten Katalysator-Starter-Mischung kann die zweite Aktivierungsstufe gemäß Schritt (β) im ersten Teil des Rohrreaktors und die Terpolymerisation gemäß Schritt (γ) im zweiten Teil des Rohrreaktors erfolgen. Die molaren Verhältnisse der Reaktionspartner können dabei je nach gewünschtem Polymer variieren.

In einer bevorzugten Ausführungsform wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Epoxiden/cyclischen Anhydriden kann am Eingang des Reaktors eingebracht werden. Die Restmenge der Epoxide/cyclischen Anhydride wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut, oder Mischer-Wärmetauscherelemente, die gleichzeitig die Durchmischung und Wärmeabfuhr verbessern. Bevorzugt wird durch die Mischelemente zudosiertes CO₂ und Epoxiden/cyclischen Anhydride mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung der erfindungsgemäß einsetzbaren Polyoxyalkylenpolyole mit phosphorfunktionellen Wiederholungseinheiten verwendet werden.

Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet werden in welchem nach der Reaktion vorhandene Restkonzentrationen freier Epoxide/cyclischer Anhydride abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.% Epoxid/cyclisches Anhydrid. Die Nachreaktionszeit bzw. die Verweilzeit im nachgeschalteten Reaktor beträgt bevorzugt 10 min bis 24 h, besonders bevorzugt 10 min bis 3 h.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyoxyalkylenpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1*-tert-*Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mₙ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mₙ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyoxyalkylenpolyole dienen können. Bevorzugt werden Polyetherpolyole mit Mₙ = 150 bis 2000 g/mol zur Herstellung der Polyoxyalkylenpolyole eingesetzt.

Des Weiteren können als H-funktionelle Startersubstanzen Polycarbonatdiole eingesetzt werden, insbesondere solche mit einem Molekulargewicht Mₙ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform der Erfindung können Polyoxyalkylenpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (III),

HO-(CH₂)ₓ-OH (III)

wobei x eine Zahl von 1 bis 20, bevorzugt eine gerade Zahl von 2 bis 20 ist. Beispiele für Alkohole gemäß Formel (III) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (III) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht Mₙ im Bereich von 62 bis 4500 g/mol und insbesondere ein Molekulargewicht Mₙ im Bereich von 62 bis 3000 g/mol.

In einer Ausführungsform des erfindungsgemäßen Verfahrens wird das Polyoxyalkylenpolyol in Gegenwart eines DMC-Katalysators hergestellt.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittleren Molekulargewicht größer als 500 g/mol enthalten.

Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (IV) auf,

M(X)ₙ (IV)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanid, Isocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (V) auf,

Mᵣ(X)₃ (V)

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VI) auf,

M(X)ₛ (VI)

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VII) auf,

M(X)t (VII)

wobei
M ausgewählt ist aus den Metallkationen Mo⁶⁺ und W⁶⁺,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VIII) auf

(Y)ₐM'(CN)_{b}(A)_{c} (VIII)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),Y ausgewählt ist aus einem oder mehreren Metallkationen der Gruppe bestehend aus Alkalimetall (d.h. Li⁺, Na⁺, K⁺, Rb⁺) und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c ganzzahlige Zahlen sind, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (IX)

Mₓ[M'ₓ,(CN)_{y}]_{z} (IX)

worin M wie in den Formeln (III) bis (VI) und
M' wie in Formel (VII) definiert ist, und
x, x', y und z ganzzahlig sind und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Die phosphorfunktionellen Comonomere können statistisch oder blockweise in den Polyoxyalkylenpolyolen verteilt sein. Auch Gradientenpolymere sind einsetzbar.

Des Weiteren erfindungsgemäß sind phosphorfunktionelle Polyoxyalkylenpolyole erhältlich nach dem erfindungsgemäßen Verfahren. Die nach dem erfindungsgemäßen Verfahren herstellbaren phosphorfunktionellen Polyoxyalkylenpolyole zeigen eine gute flammhemmende Wirkung und lassen sich durch ihren sterischen Aufbau und der daraus resultierenden Viskosität sehr gut innerhalb weiterer Verfahren, wie z.B. einer anschließenden Vernetzung, weiterverarbeiten. Die erfindungsfindungsgemäßen phosphorfunktionellen Polyoxyalkylenpolyole oder deren Umsetzungsprodukte mit Isocyanaten können darüber hinaus bei Bedarf zusätzlich mit üblichen externen Flammschutzadditiven, wie Halogenkohlenwasserstoffen, ggf. mit Antimontrioxid als Synergist, (verkapselten) rotem Phosphor, monomeren oder oligomeren Phosphorverbindungen, polyhedralen oligomeren Silsesquioxanen, anderen Siloxanen, Melaminisocyanurat, Melaminpolyphosphat, Cyclophosphazenen, Carbonnanotubes, Fullerenen, Montmorillonit oder Aluminiumhydroxid additiviert werden. Die Zugabe weiterer Additive, wie sie zum Beispiel in Progress in Polymer Science 34 (2009) 1068-1133 beschrieben sind, ist auch möglich.

In einer Ausgestaltung des Verfahrens können in einem weiteren Verfahrensschritt die phosphorfunktionellen Polyoxyalkylenpolyole durch Zugabe von Di- und/oder Polyisocyanaten zu Polyurethanen umgesetzt werden. In einer Ausführungsform werden Mischungen von Polyoxyalkylenpolyolen und phosphorfunktionellen Polyoxyalkylenpolyolen mit einem oder mehreren Di- oder Polyisocyanaten umgesetzt. Bevorzugt wird hierbei wenigstens ein phosphorfunktionelles Polyoxyalkylenpolyol mit einem oder mehreren Di- oder Polyisocyanaten umgesetzt. Die Einzelheiten der Umsetzung von Polyolen mit Di- oder Polyisocyanaten sind dabei dem Fachmann aus der Polyurethan-Chemie bekannt.

Des Weiteren erfindungsgemäß sind vernetzte phosphorfunktionelle Polyoxyalkylenpolyol-Polymere erhältlich nach dem erfindungsgemäßen Verfahren. Die vernetzten phosphorfunktionellen Polyoxyalkylenpolyol-Polymere zeichnen sich durch reproduzierbare mechanische Eigenschaften und eine kontrollierbare Reaktionsführung aus, da die Edukte eine enge und definierte Molekulargewichtsverteilung aufweisen und die weitere Vernetzung erst nachgelagert erfolgt. Auf diese Art und Weise können Nebenreaktionen im Rahmen einer Vernetzung der Polyoxyalkylenpolyole schon im Rahmen der Phosphorfunktionalisierung vermieden werden. Des Weiteren zeigen die vernetzten phosphorfunktionellen Polyetehrcarbonatpolyol-Polymere gute flammhemmende Eigenschaften ohne nennenswerte Einbußen im Bereich der sonstigen Qualitätskriterien für vernetzte Systeme wie Steifigkeit, mechanische Belastbarkeit, Abriebeigenschaften, Elastizität o.ä..

Die nach dem erfindungsgemäßen Verfahren erhältlichen phosphorfunktionellen Polyoxyalkylenpolyole können als flammhemmende Haftvermittler, Füllstoffaktivatoren oder Additive verwendet werden. Gerade die erfindungsgemäße Kombination der unterschiedlichen funktionellen Gruppen im Polymer kann aufgrund der Kombination hydrophiler und hydrophober Eigenschaften zu einer besonders guten Eignung führen, unterschiedliche polare Grenzflächen miteinander zu verbinden. Demzufolge lassen sich die erfindungsgemäß herstellbaren phosphorfunktionellen Polyoxyalkylenpolyole besonders gut in den Fällen einsetzten, in denen eine Haftung zwischen unterschiedlichen polaren Grenzflächen gewünscht ist. Ebenso lässt sich durch den Einsatz der phosphorfunktionellen Polyoxyalkylenpolyole eine bessere Dispergierung von Füllstoffen erreichen. Dieses kann zu einer schnelleren Reaktionsführung im Rahmen von Vernetzungsreaktionen und demzufolge zu einem gleichmäßigeren Endprodukt beitragen.

Des Weiteren können die vernetzten phosphorfunktionellen Polyoxyalkylenpolyol-Polymere, welche nach dem erfindungsgemäßen Verfahren erhältlich sind, als flammhemmende Beschichtung, Schaum, Dichtmasse, thermoplastischer Kunststoff, duromerer Kunststoff, Kautschuk Verwendung finden. Diese Verwendung der vernetzten phosphorfunktionellen Polyoxyalkylenpolyol-Polymere kann besonders vorteilhaft sein, da durch die gewählte Verfahrensführung die übrigen Gebrauchseigenschaften der vernetzten phosphorfunktionellen Polyoxyalkylenpolyol-Polymere durch die flammhemmende Funktionalisierung nur unwesentlich beeinträchtigt werden.

Ebenso im Sinne der Erfindung sind Formkörper aufweisend eine flammhemmende Schicht umfassend ein flammhemmendes, vernetztes phosphorfunktionelles Polyoethercarbonatpolyol-Polymer herstellbar nach dem erfindungsgemäßen Verfahren. Die erfindungsgemäß hergestellten vernetzten phosphorfunktionellen Polyoxyalkylenpolyol-Polymere können sich besonders zum Aufbau flammhemmender, mechanisch stabiler Schichten auf Formkörpern eigenen, da sich die erfindungsgemäßen Polyoxyalkylenpolyole einfach und reproduzierbar auf Formkörpern platzieren lassen und eine Vernetzungsreaktion mit Diiso- oder Polyisocyanaten einfach und reproduzierbar durchführbar ist.

Hinsichtlich weiterer Vorteile und Merkmale des vorbeschriebenen Formkörpers wird hiermit explizit auf die Erläuterungen im Zusammenhang mit den erfindungsgemäßen vernetzten phosphorfunktionellen Polyoethercarbonatpolyol-Polymere sowie dem erfindungsgemäßen Verfahren verwiesen. Auch sollen erfindungsgemäße Merkmale und Vorteile der erfindungsgemäßen phosphorfunktionellen Polyoxyalkylenpolyole auch für das erfindungsgemäße Verfahren und die erfindungsgemäßen vernetzten phosphorfunktionellen Polyoxyalkylenpolyol-Polymere anwendbar sein und als offenbart gelten und umgekehrt. Unter die Erfindung fallen auch sämtliche Kombinationen aus zumindest zwei von in der Beschreibung und/oder den Ansprüchen offenbarten Merkmalen.

### Beispiele

Eingesetzte H-funktionelle Startersubstanz (Starter):
PET-1 difunktionelles Poly(oxypropylen)polyol mit einer OH-Zahl von 112 mg_{KOH}/g

Eingesetztes Alkylenoxid, das keine Doppelbindungen trägt:
PO Propylenoxid

Der DMC-Katalysator wurde hergestellt nach Beispiel 6 der WO-A 01/80994.

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [erste Aktivierungsstufe] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [zweite Aktivierungsstufe] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Polymerisationsstufe] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas (CO₂ und ggf. Alkylenoxid) abgesaugt wurde und über die Hohlwelle des Rührers in die Reaktionsmischung eingeleitet wurde.

a) Bei der Terpolymerisation von Propylenoxid, Phosphorfunktionellem Alkylenoxid und CO₂ resultiert neben dem cyclischen Propylencarbonat das Polyoxyalkylenpolyol, welches einerseits in Formel (Xa) gezeigte Polycarbonat-Einheiten enthält, 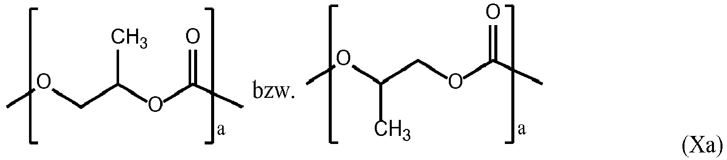 und andererseits in Formel (Xb) gezeigte Polyether-Einheiten enthält.

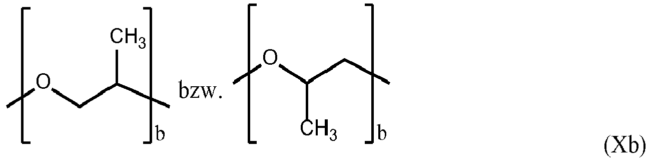

Die Charakterisierung des Reaktionsgemisches erfolgte durch ¹H-NMR Spektroskopie und Gelpermeations-Chromatographie.

Das Verhältnis der Menge an cyclischem Propylencarbonat zu Polyoxyalkylenpolyol (Selektivität; Verhältnis c/a) sowie der Anteil der nicht umgesetzten Monomere wurden mittels ¹H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyoxyalkylenpolyol (Verhältnis a/b) sowie der molare Anteil der in das Polymer eingebauten Comonomere wurden mittels ¹H-NMR Spektroskopie bestimmt. Eine Probe der gereinigten Reaktionsmischung wurde dazu jeweils in deuteriertem Chloroform gelöst und auf einem Spektrometer der Firma Bruker (AV400, 400 MHz) vermessen.

Die relevanten Resonanzen im ¹H-NMR Spektrum (bezogen auf TMS = 0 ppm), die zur Integration verwendet wurden, ergeben sich wie folgt:

| Signal | Verschiebung in ppm | Bezeichnung | Fläche entspricht Anzahl H-Atomen |
|---|---|---|---|
| I1 | 1,10 - 1,17 | CH₃-Gruppe der Polyether-Einheiten | 3 |
| I2 | 1,25 - 1,34 | CH₃-Gruppe der Polycarbonat-Einheiten | 3 |
| I3 | 1,45 - 1,48 | CH₃-Gruppe des cyclischen Carbonats | 3 |
| I4 | 2,95 - 3,00 | CH-Gruppen des freien, nicht abreagierten Propylenoxids | 1 |

### Herstellung der phosphorfunktionellen Epoxide

### P1: Diethyl (oxiran-2-ylmethyl)phosphonate (Vergleichsbeispiel).

In einer 2 1-Glasapparatur mit Tropftrichter und Destillationseinheit werden 90,9 g (0,547 mol) Triethylphosphit bei 92° C zugegeben. Epibromhydrin (50 g, 0,365 mol) wird während 11 h zu getropft. 10 h nach Beginn des Zutropfens wird das Destillat erhalten (Ethylbromid, 37-38 ° C). Die Mischung wird weitere 20 Stunden bei 95° C gerührt. Danach wird das Gemisch auf 75° C abgekühlt und zur Entfernung von Verunreinigungen wird ein Vakuum angelegt. Das erhaltene Produkt ist farblos.

### P2: Diethyl (4- (oxiran-2-ylmethoxy) phenyl) phosphonat

Zunächst erfolgt Hertstellung des Diethyl (4-hydroxyphenyl) phosphonat, wobei 50 g (0,289 mol) von 4-Bromphenol und NiBr₂ (6,3 g, 28,9 mmol, 10 mol%) Triethylphosphit 96,3 ml (0,580 mol), langsam über eine Spritzenpumpe (3 Stunden) in Mesitylen (48 ml) hinzugegeben wurden und im Anschluss das die Temperatur des Systems auf 160 ° C erhöht. Das Reaktionsgefäß ist mit einer Destillationseinrichtung ausgestattet, um EtBr zu entfernen. Die vollständige Umwandlung wird in 3 Stunden erreicht. Aufarbeitung und Säure-Basen-Extraktion wurden gemäß dem berichteten Verfahren durchgeführt. Das Produkt wurde nach Entfernen der flüchtigen Bestandteile unter vermindertem Druck als weißer Feststoff (54,3 g, 81%) erhalten und ohne zusätzliche Reinigung verwendet.

Das zuvor hergestellte Diethyl (4-hydroxyphenyl) phosphonat (50 g, 0,217 mol) und K₂CO₃ (45 g, 0,325 mol) wurden in einen trockenen Kolben gegeben, der mit einem Rückflusskühler ausgestattet war. Dann wurden CH₃CN (100 ml) und Epichlorhydrin (60,2 g, 51 ml, 0,651 Mol) zugegeben (6 Stunden erreicht) und der Kolben in ein auf 90°C vorgeheiztes Ölbad gegeben. Die Aufarbeitung und Extraktion wurde nach einem in der Literatur beschriebenen Verfahren (WO2008/112483 A2) für eine analoge Reaktion durchgeführt. Das Produkt wurde durch Säulenchromatographie (EtOAc / Net3 100: 1) isoliert und rein als ein gelbliches Öl erhalten. Ausbeute: 55%. 1 H-NMR (400 MHz, CDCl 3) δ; 7,68 (dd, J = 12,8, 8,9 Hz, 2H), 6,91 (dd, J = 8,7, 3,3 Hz, 2H), 4,23 (dd, J = 11,1, 3,0 Hz, 1H) 4,11-3,88 (m, 5H), 3,32-3,27 (m, 1H), 2,86 (t, J = 4,7 Hz, 1H), 2,70 (dd, J = 4,7, 2,7 Hz, 1H), 1,24 (t, J = 7,1 Hz, 3H). 13C NMR (100 MHz, CDCl3;) δ; 133,8 (d, J = 11,5 Hz), 114,5 (d, J = 16,1 Hz), 68,8, 61,9 (d, J = 5,4 Hz), 49,9, 44,6, 16,3 (d, J = 6,7 Hz). 31 P NMR (162 MHz, CDCl 3)δ; 19,5.

### P3: Diethyl (9- (oxiran-2-yl) nonyl) phosphonat

Zunächst wurde Diethyl undec-1-enephosphonat entsprechend des in Chambrier, I.; Banerjee, C.; Remiro-Buenamanana, S.; Chao, Y.; Cammidge, A. N.; Bochmann, M. Inorg. Chem. 2015, 54, 7368. Verfahrens synthetisiert. Die Verbindung wurde im Gemisch mit Triethylphosphat nach Säulenchromatographie (Hexan / EtOAc 2: 8) erhalten. Ausbeute: 35%. Die Mischung wurde in der nächsten Stufe ohne zusätzliche Reinigung verwendet. Im Anschluss wurde eine Lösung von m-Chlorperbenzoesäure (13,44 g, 60 mmol) in CH₂Cl₂ (150 ml) wurde tropfenweise zu einem eisgekühlten und gerührtem gerührt. Lösung von Diethyl undec-1-enephosphonat (8,68 g, 29,91 mmol) in CH₂Cl₂ (200 ml) während 3 h. Nach dieser Zeit das Eisbad wurde entfernt und das Gemisch wurde 48 Stunden bei Raumtemperatur gerührt. Als die Reaktion war vervollständigt wurde der Überschuss an m-Chlorperbenzoesäure mit 10% Na₂S₂O₃ reduziert. Die organische Schicht wurde mit 10% Na₂CO₃, Kochsalzlösung gewaschen und über wasserfreiem getrocknet MgSO₄. Das Rohprodukt wurde an einer Kieselgelsäule gereinigt (Laufmittel: CHCl₃: MeOH 35: 1 v / v) um ein geeignetes farbloses Öl von Diethyl (2,3-epoxypropyl) phosphonat. (

### Herstellung der phosphorfunktionellen Polyoxyalkylenpolyole (PEC)

### PEC-1: Herstellung der phosphorfunktionellen Polyoxyalkylenpolyole mit DMC Katalysatoren (Vergleich):

Ein 150 ml-Reaktor wurde mit einer Mischung des bifunktionellen Starters PPG1000 (30 g, 30 mmol) und DMC-Katalysator (27 mg) beladen.

Der Katalysator wurde nach dem Strippen (Trocknen) bei 130°C aktiviert (3 + 3 + 3 g PO). Der Reaktor wurde auf 105 ° C abgekühlt und unter einer konstanten CO₂-Atmosphäre von 15 bar wurden 5 g PO zugegeben, gefolgt von einer Mischung von PO und P1 (39 g /12 g, 0,6 ml / min). Nach Zugabe von 3 g der PO-P1 Mischung, wurde die Reaktion wegen fehlender katalytischer Aktivität des DMC-Katalysators gestoppt.

### PEC-2: Herstellung der phosphorfunktionellen Polyoxyalkylenpolyole mit DMC Katalysatoren mit P2-Epoxid:

Ein 150 ml-Reaktor wurde mit einer Mischung des bifunktionellen Starters Polypropylenglycol (PPG 1000, 30 g, 30 mmol) und DMC-Katalysator (27 mg) beladen.Der Katalysator wurde nach dem Strippen (Trocknen) bei 130°C durch Zugabe von 9g Propylenoxid (3 + 3 + 3 g PO) aktiviert. Der Reaktor wurde auf 105 ° C abgekühlt und unter einer konstanten CO₂-Atmosphäre von 15 bar wurden 5 g PO zugegeben, gefolgt von einer Mischung von PO und P2 (25 g / 4,65 g, 0,6 ml / min). Am Ende der Zugabe wurde die Reaktion eine weitere Stunde gerührt. Das Rohprodukt wurde durch Dünnschichtverdampfer gereinigt, wobei das phosphorfunktionalisierte PEC erhalten wurde. Zersetzungstemperatur: 365.6 °C.PDI= 1.14, Mₙ= 5251 g/mol. Phosphorgehalt 1% Gew.-% ¹H-NMR (400 MHz, CDCl₃) δ ppm; 7,68; 6,91; 4,84; 4,11-3,22; 1,30-1,17; ³¹P NMR (162 MHz, CDCl₃) δ ppm; 19,66; 19,44.

## Patentansprüche

1. Verfahren zur Herstellung eines phosphorfunktionellen Polyoxyalkylenpolyols, bei dem ein Polyoxyalkylenpolyol unter Verwendung eines phosphorfunktionellen Epoxides, der Formel I 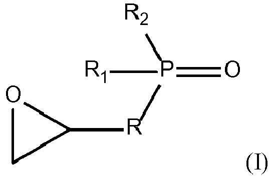
als Comonomer hergestellt wurde, wobei
R für eine von eine mindestens zweigliedrige Kette steht und
R1 und R2 unabhängig voneinander für einen C1-C22-Alkyl, einen C1-C22-Alkoxy, einen C7-C15 Arylalkyl- oder Alkylaryl oder Arylalkoxy oder Alkylaryloxyrest oder einen C6-C14 Aryl oder Aryloxyrest steht oder R1 und R2 Glieder eines neben dem Phosphoratom Kohlenstoffatome und bis zu zwei Sauerstoffatome enthaltenden 5, 6 oder 7 gliedrigen Rings sein können, der durch annelierte Benzoringe substituiert sein kann.

2. Verfahren gemäß Anspruch 1, wobei
R für einen unsubstituierten C1-C22-Alkylrest, substituierten C1-C22-Alkylrest, unsubstituierten C6-C14 Arylrest oder einen substituierten C6-C14 Arylrest steht und
R1 und R2 unabhängig voneinander für einen C1-C8-Alkoxyrest stehen.

3. Verfahren gemäß Anspruch 1 oder 2, wobei das phosphorfunktionelle Epoxid eine oder mehrere Verbindung(en) ist und ausgewählt wird aus der Gruppe bestehend aus Diethyl (9-(oxiran-2-yl)nonyl) phosphonat, Tetraethyl(4,4-methylenebis(4,1-phenylene)-bis(azanediyl)) bis((3-methoxy-4-(oxiran-2-ylmethoxy)phenyl)methylene)diphosphonat, 2-(6-oxabicyclo [3.1.0]hex-3-yl)ethyl phosphonic acid diisopropyl ester, 2,3-Epoxycyclohexyl-phosphinsaeure-diaethylester, 2,3-Epoxy-cyclohexyl)-phosphinsaeuredipropylester, 2,3-Epoxy-cyclohexyl)-phosphinsaeure-dipropylester, Ethyl 2-(diethoxyphosphoryl)-5-(oxiran-2-yl)pentanoate und Diethyl (4- (oxiran-2-ylmethoxy) phenyl) phosphonat bevorzugt Diethyl (4- (oxiran-2-ylmethoxy) phenyl) phosphonat.

4. Verfahren gemäß einem der Ansprüche 1 bis 3, wobei das Phosphorfunktionellen Epoxid einen Anteil von 0,1 mol-% bis 50 mol-%, bevorzugt 1 mol-% bis 40 mol-%, und besonders bevorzugt 5 mol-% bis 25 mol-% bezogen auf das Polyoxyalkylenpolyol aufweist.

5. Verfahren gemäß einem der Ansprüche 1 bis 4, wobei das Polyoxyalkylenpolyol ein Polyethercarbonatpolyol ist.

6. Verfahren gemäß einem der Ansprüche 1 bis 5, wobei das Polyoxyalkylenpolyol in Gegenwart eines DMC-Katalysators hergestellt wird.

7. Verfahren gemäß einem der Ansprüche 1 bis 6, wobei das Verfahren folgende Schritte umfasst:
(α) Vorlegen einer H-funktionellen Starterverbindung und eines DMC-Katalysators,
(β) gegebenenfalls Zudosieren eines phosphorfreien Epoxids,
(γ) Zudosieren
(γ1) mindestens eines Epoxids, sowie
(γ2) mindestens des phosphorfunktionellen Epoxides und
(γ3) optional von Kohlendioxid, bevorzugt von Kohlendioxid.

8. Phosphorfunktionelles Polyoxyalkylenpolyol erhältlich nach einem Verfahren gemäß einem der Ansprüche 1 bis 7.

9. Verfahren zur Herstellung von Polyurethanen durch Umsetzung des Polyoxyalkylenpolyols gemäß Anspruch 8 mit Di- und/oder Polyisocyanaten.

10. Verwendung des phosphorfunktionellen Polyoxyalkylenpolyols gemäß Anspruch 8 als flammhemmender Haftvermittler, Füllstoffaktivator oder Additiv.
